Europäisches Patentamt

(19) European Patent Office

Office européen des brevets

(11) Publication number: **0 217 725**
**B1**

(12) **EUROPEAN PATENT SPECIFICATION**

(45) Date of publication of patent specification: **16.05.90**

(21) Application number: **86630145.0**

(22) Date of filing: **29.09.86**

(51) Int. Cl.⁵: **C 23 F 1/02,** H 01 M 2/12,
B 65 D 83/14

(54) **Safety vented cover for sealed container and method of manufacturing same.**

(30) Priority: **30.09.85 US 782048**

(43) Date of publication of application:
**08.04.87 Bulletin 87/15**

(45) Publication of the grant of the patent:
**16.05.90 Bulletin 90/20**

(84) Designated Contracting States:
**AT CH DE FR GB IT LI NL**

(56) References cited:
**DE-A-2 336 889**
**DE-A-2 941 749**
**US-A-4 003 505**
**US-A-4 122 595**

**PATENTS ABSTRACTS OF JAPAN, vol. 8, no.
190 (E-263)1627r, 31st August 1984; & JP-A-59
79 965 (NIHON DENCHI K.K.) 09-05-1984
PATENTS ABSTRACTS OF JAPAN, vol. 9, no.
278 (C-312)2001r, 6th November 1985; & JP-A-
60 125 382 (NIPPON KOKAN K.K.) 04-07-1985**

## Description

The present invention relates to a method of making safety vents in metallic covers for hermetically sealed battery containers and a circular steel alloy battery cover for hermetically sealed containers.

It is generally well known to provide hermetically sealed containers with a rupturable safety vent membrane in the container body so that if gas pressures develop within the container beyond a predetermined limit, the membrane ruptures to permit release of gas, avoiding uncontrollable container explosion or disintegration and possible personal and property damages occasionally associated therewith. Several such arrangements as taught by the prior art include: a pressure frangible safety device as disclosed in US—A—3 617 386, issued to Robert J. Bosben on November 2, 1971; a reduced area of container wall thickness designed to rupture in response to predetermined circumferential stresses occurring within the container, as disclosed in US—A—4 175 166, issued to M. G. Rosansky on Nov. 20, 1979; a cruciform shaped incision in a sealed container of V-shaped cross-section as disclosed in US—A—4 256 812, issued to K. Tamura, et al, on Mar. 17, 1981; and, pressure relief safety membranes as disclosed in US—A—4 476 200, issued to C. Markin, et al, on Oct. 9, 1984. The formation of such safety vents in the past has generally been accomplished by mechanical means such as stamping. Such past forming means have caused stress corrosion and non-uniformity in metal thickness and metal grain structure which, in turn, has resulted in ununiform pressure sensitivity and pressure responsivity characteristics.

The present invention recognizing the importance of such uniformity in thin safety membranes in potentially explosive sealed containers and further recognizing the importance of carefully controlling the dimensions and pressure sensitive characteristics of such membranes so as to be uniformily responsive to predetermined pressures provides a unique and novel method of manufacturing safety vent membranes in covers for hermetically sealed containers in an efficient, straightforward and economical manner to permit mass production of a novel and inventive product without sacrifice of desired critical pressure responsive uniformity.

Although the broad use of producing tearing lines in containers by etching is old, as disclosed in US—A—3 723 269, issued to E. Hofling on March 27, 1973, the present invention, recognizing the desirability and importance of uniformity in pressure sensitivity, and responsivity of safety vent membranes for sealed containers, provides a new and novel method and a unique product which affords such pressure sensitivity and responsivity in a manner previously unknown in the art.

Various other features of the present invention will become obvious to one skilled in the art upon reading the disclosure set forth herein.

The present invention provides a method of making a safety vent in a cover for a hermetically sealed container comprising: feeding a container cover blank into a printing zone; printing the container cover blank while in the printing zone with a masking resist pattern having an uncovered channel area to correspond to a safety vent area; feeding the masked printed container cover blank to an etching zone; subjecting the container cover blank while in the etching zone to a controlled etching process to etch the uncovered channel area to a uniform preselected depth to leave a uniform preselected material thickness which serves as a safety vent membrane capable of withstanding a preselected pressure before rupturing; and, feeding the uniformly etched cover through a rinsing zone to remove the resist and etching materials. In addition, the present invention provides a cover for a hermetically sealed container, the cover having at least one channel etched therein to extend in spaced relation from the surrounding peripheral edge thereof, the channel being of a preselected uniform depth to provide a safety vent membrane of preselected uniform thickness capable of withstanding a preselected pressure before rupturing.

More particularly the method of the present invention comprises continuously feeding a metallic strip of steel alloy material having a thickness of approximately 0.50 mm (0.020 inches) from a coil in a supply zone through a printing zone; printing said strip while in said printing zone on at least one surface thereof with a chemical masking resist pattern which includes spaced uncovered channel areas in the form of opposed mirror image circular arcs of less than 360° with the spaced arcs on at least one surface of said strip each surrounding an uncovered hole defining central area; feeding said masked printed strip to an etching zone; subjecting said strip while in said etching zone to a chemical etching process to etch said uncovered arc-like channel areas and surrounded holes to uniform preselected depths leaving said channel areas with a uniform metal thickness which serves as safety vent membranes capable of withstanding a preselected pressure in the range of approximately 0.34 to approximately 3.10 MPa (approximately 50 to approximately 450 pounds per square inch) before rupture and said uncovered central hole defining areas to at least half the depth of said channels, feeding said etched strip through a rinsing zone which includes a chemical neutralizing stage, a resist stripping stage and a washing stage; and then feeding said rinsed strip to a stamping zone to stamp said etched strip into a plurality of battery covers, each cover including an arc-like safety relief vent membrane surrounding a central aperture.

The invention also comprises a circular steel alloy battery cover for a hermetically sealed container, said cover having a thickness in the range of 0.20 to 1.52 mm (0.008 to 0.06 inches) and having at least one chemically etched channel therein in the form of mirror image circular arcs of less than 360° spaced from the peripheral edge of said cover to provide a safety vent membrane of uniform preselected thickness in the range of 0.02 to 0.101 mm (0.001 to 0.004 inches) capable of uniformly responding to and withstanding a preselected pressure in the range of approximately 0.34 to 3.10 MPa (50 to 450 pounds per square inch) before rupture, said arcs surrounding an aperture therein sized to receive an assembly part to be fused therein.

It is to be understood that various changes can be made by one skilled in the art in the several steps of the method and in the several parts of the product disclosed herein without departing from the scope of the present invention. For example, the etching step, the container cover material, the rupture limits and geometry of the safety vent, all can be changed by one skilled in the art to obtain desired results without departing from the inventive scope of the disclosure herein.

Referring to the drawings which disclose one advantageous embodiment of the present invention and several modifications thereof:

Figure 1 is a flow diagram setting forth schematically the several steps involved in carrying out the inventive process;

Figure 2 is an enlarged plan view of a portion of a strip of material which has been subjected to the inventive process of Figure 1;

Figure 3 is a further enlarged cross-sectional view of the material of figure 2 taken in a plane passing through line 3—3 of Figure 2;

Figure 4 is a perspective view of an inventive cover for a hermetically sealed container, further disclosing a central aperture therein;

Figure 5 is a plan view of a sheet of material disclosing two possible positions in which a plurality of modified safety vent members can be formed on a single sheet of material in accordance with the present invention.

Figure 6 is an enlarged plan view of a portion of the sheet of material of Figure 5;

Figure 7 is a cross-sectional view taken in a plane through line 7—7 of Figure 6, disclosing a safety vent membrane formed by treating the sheet in mirror image fashion on opposed surfaces thereof;

Figure 8 is a perspective view of one face of a cover for a hermetically sealed container in accordance with Figures 5—7;

Figure 9 is an enlarged plan view of a further modified safety vent membrane, disclosing a piercing point on one face thereof;

Figure 10 is a cross-sectional view of the membrane of Figure 9 taken in a plane through line 10—10 of Figure 9;

Figure 11 is a perspective view of one face of a cover for a hermetically sealed container, in accordance with Figures 9 and 10; and

Figure 12 is a perspective view of the other face of a cover for a hermetically sealed container, in accordance with Figures 9 and 10.

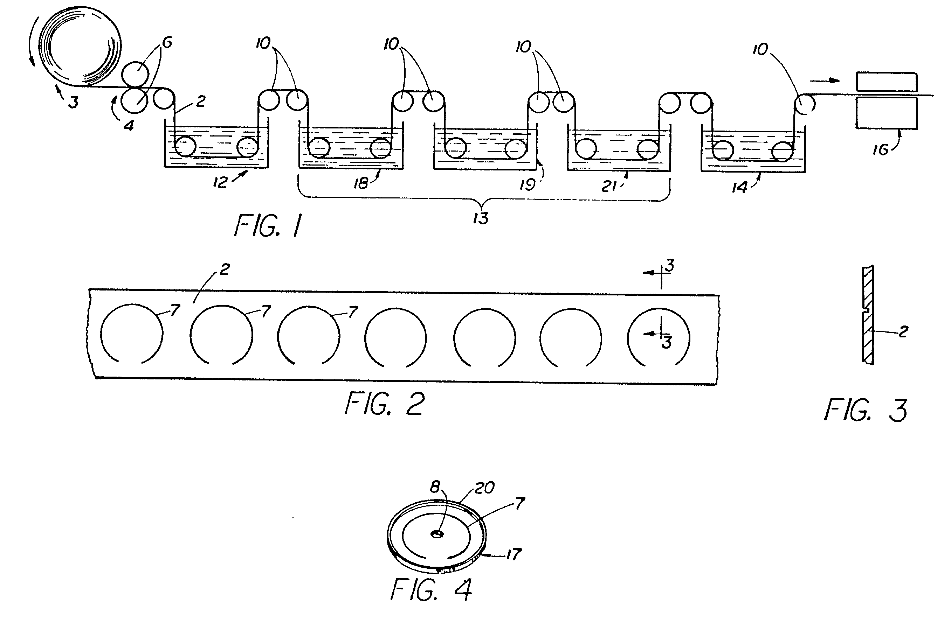

Referring to Figure 1 of the drawings, a strip 2 of material is fed from a supply zone 3 where it can be stored in the form of a coil to a printing zone 4. The strip 2 of coiled material can be any one of a number of known materials used in the manufacture of covers for hermetically sealed containers, which is responsive to the hereinafter described controlled etching processes and, in the manufacture of battery covers such as those utilized for hermetically sealed batteries of the button type, a suitable metallic alloy such as cold rolled alloyed carbon steel (for example "C1010") having a thickness in the range of 0.20 to 1.52 mm (0.008 to 0.06 inches), and, advantageously, approximately 0.50 mm (0.020 inches) plus or minus 0.05 mm (0.002 inches) can be used. It is to be understood that prior to carrying out the etching process, an appropriate cleaning and degreasing of the metallic alloy can be accomplished in a satisfactory cleansing and degreasing bath (not shown).

In the event a metallic steel alloy strip is used, as in the example hereinafter described, a suitable bath using a caustic cleansing agent would suffice.

In printing zone 4, opposed printing rolls 6, frequently or continuously treated with a suitable masking resist agent or etching ground which can be selected from appropriate chemical materials in accordance with the material to be etched and the subsequent chemicals to be used in the etching process, mask all surfaces of the strip of material not to be etched with an appropriate etching resist coating, for example, a synthetic resin capable of resisting the particular etching step to be employed.

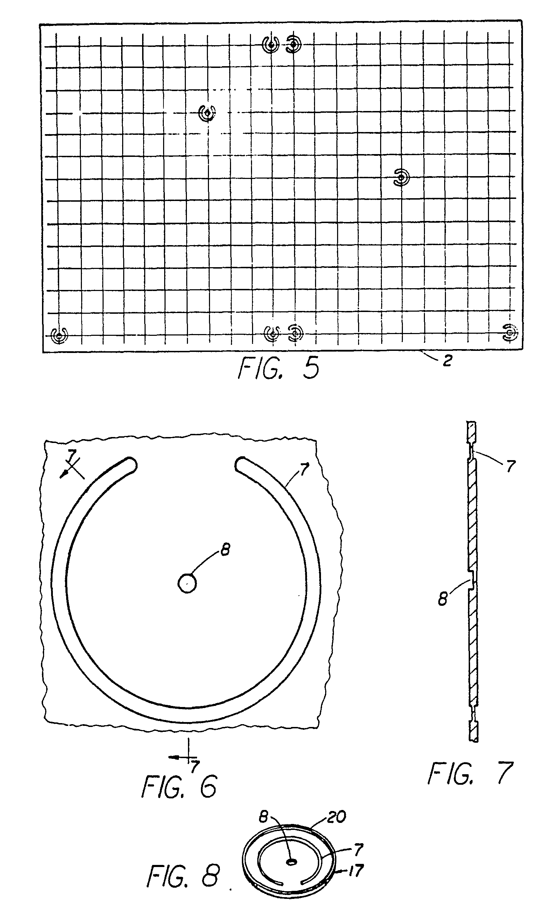

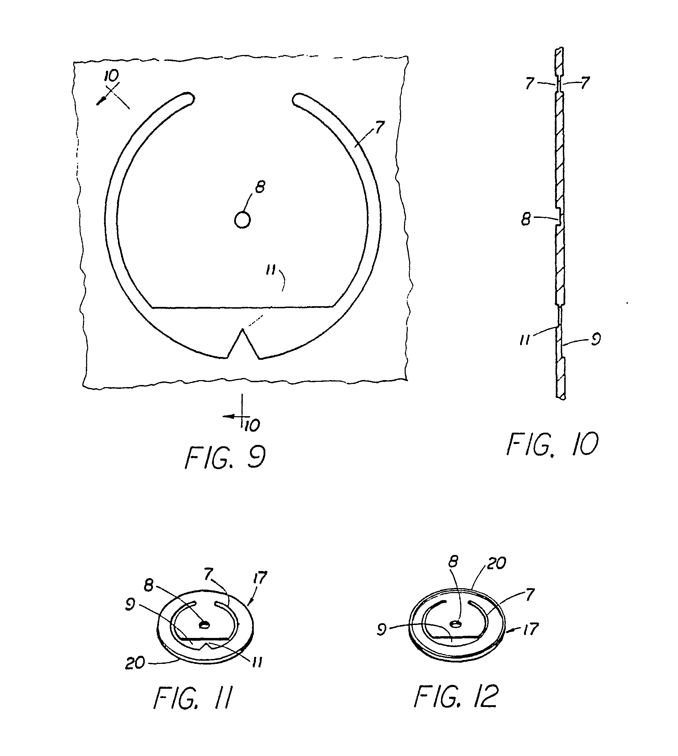

The unmasked portion of the strip of material to which no resist coating has been applied in printing zone 4 by rolls 6 can be in any one of several geometric pattern forms in accordance with the present invention. In the embodiment of Figures 2 and 3, the geometric pattern includes spaced uncovered channel areas in the form of circular arcs 7 of less than 360 degrees, with a portion of each otherwise complete circle being masked to provide a retention portion. In the embodiment of Figures 4—12, each of the circular arcs 7 surrounds an uncovered hole defining central area 8 on at least one surface thereof and in the embodiments of Figures 5—8, the arcs 7 are on opposite surfaces of material strips 2 in opposed mirror image relationship. In Figures 9—12, the geometric pattern of unmasked mirror image circular arcs 7 on opposite surfaces of the strip of material 2, each include an enlarged unmasked chord section 9 located at the base of the arc. It is to be noted that one surface of the strip of material 2 in the Figures 9—12 also includes a triangular resist mask area that extends into chord section 9 of each channel 7 so that upon etching each channel 7 on one side incorporates a sharp piercing point 11 therein. Piercing point 11 is geometrically disposed opposite to the masked covered retention portion of the otherwise circle defining circular arc 7 so as to facilitate tearing and retention of the torn portion when preselected pressure on the etched portion of the cover is exceeded.

Referring to Figure 5, it can be seen that a plurality of unmasked channels 7 can be positioned on strip 2 in any one of a number of different geometric orientations, depending upon material grains and the results desired. In the embodiment of Figure 5, each of the horse-shoe shaped channels 7 in the lower half of strip 2 are shown as oriented in a position which is at 90 degrees to the horse-shoe shaped channels 7 in the upper half of the strip 2 for purposes of illustration. It is to be understood that other positions can also be utilized and that, generally, all channels on a strip are oriented in a similarly selected position. As also will be noted in Figure 5, strip 2 can be in the form of individual sheets rather than a continuous coil as disclosed in Figure 1.

In accordance with the inventive process and again referring to Figure 1, after strip 2 has been suitably masked with a resist coating in the manner above discussed, strip 2 is fed along spaced idle rollers 10 through an etching zone 12, a rinsing zone 13, a lubricating zone 14 and finally a stamping or forming zone 16 where individual container covers 17, such as disclosed in Figures 4, 8, 11 and 12, are formed. It is to be understood that strip 2, after passing through rinsing zone 13, could be again coiled for subsequent treatment elsewhere. It, also, is to be noted that various types of rims 20 can be formed on covers 17 or rims can be eliminated, if so desired.

In passing through zones 12, 13 and 14 strip 2 is fed along suitable idle rollers 10, as above noted. In etching zone 12, strip 2 can be fed through a suitable acid etching bath, such as ferric chloride if the material to be etched is a steel alloy. The density and temperature of the etching bath and even the number of baths can be controlled to avoid gas bubbling. Also, such parameters as the rate of feed or residence time of the strip within the bath or baths, the acidity concentrations of the bath and bath temperatures are all carefully controlled so that the etching depth and thus the thickness of the material is carefully predetermined and maintained uniform along the unmasked surfaces. For example, when a steel alloy of 0.50 mm (0.020 inches) is used, the etching is controlled to provide a uniform membrane thickness in the range of 0.02 to 0.101 mm (0.001 to 0.004 inches) plus or minus 0.005 mm (0.0002 inches) throughout the uncovered area. It is to be understood that advantageously, when battery covers for hermetically sealed containers are being processed, the depth of etching is so controlled as to leave safety membranes of metal thickness capable of withstanding a preselected pressure within the sealed containers of which such covers form a part in the range of approximately 0.34 to approximately 3.10 MPa (approximately 50 to approximately 450 pounds per square inch) before the safety membranes rupture.

Once strip 2 has been properly etched in etching zone 12, it is then fed through rinsing zone 13. In the inventive embodiment of Figure 1, rinsing zone 13 can include three stages, namely, a neutralizing stage 18, a resist stripping stage 19 and a washing stage 21. The neutralizing stage 18 can include a bath of suitable caustic or alkaline solution such as sodium hydroxide.

The stripping stage can include an appropriate acidic bath depending upon the chemistry of the mask resist coating applied to printing rolls 6 in printing zone 4 and the washing stage 21 can be a plain tap water bath. From the last stage of rinsing zone 13, strip 2 can be fed to a suitable oil lubricating zone 14 before it is fed into a forming or stamping zone 16 to form covers 17 from strip 2. As in etching zone 12, the residence times and bath concentrations in the rinsing zone 13, stages 18, 19 and 21 can be controlled in accordance with the results desired.

As aforenoted, it is to be understood that various changes can be made in the several steps of the method and product disclosed without departing from the invention. For example, other covers besides those for hermetically sealed containers can be so manufactured and other container materials besides steel alloys can be used in the inventive process and the etching treatments and channel geometrics can be varied to provide safety membranes which will accommodate other predetermined pressures for containers.

## Claims

1. A method of making safety vents in metallic covers for hermetically sealed battery containers comprising continuously feeding a metallic strip (2) of steel alloy material having a thickness of approximately 0.50 mm (0.020 inches) from a coil in a supply zone (3) through a printing zone (4); printing said strip (2) while in said printing zone (4) on at least one surface thereof with a chemical masking resist pattern which includes spaced uncovered channel areas in the form of opposed mirror images circular arcs (7) of less than 360° with the spaced arcs on at least one surface of said strip each surrounding an uncovered hole defining central area (8); feeding said masked printed strip to an etching zone (12); subjecting said strip while in said etching zone (12) to a chemical etching process to etch said uncovered arc-like channel areas and surrounded holes to uniform preselected depths leaving said channel areas with a uniform metal thickness which serves as safety vent membranes capable of withstanding a preselected pressure in the range of approximately 0.34 to approximaately 3.10 MPa (approximately 50 to approximately 450 pounds per square inch) before rupture and said uncovered central hole defining areas to at least half the depth of said channels, feeding said etched strip through a rinsing zone (13) which includes a chemical neutralizing stage (18), a resist stripping stage (19) and a washing stage (21); and then feeding said rinsed strip to a stamping zone (16) to stamp said etched strip into a plurality of battery covers (17), each cover including an arc-like safety relief vent membrane surrounding a central aperture.

2. The method according to claim 1, characterized by said printing of said metallic strip (2) including masking resist patterns with uncovered channel areas in opposed mirror image relation on both faces of said metallic strip.

3. The method according to claim 1, characterized by said printing of said metallic strip (2) including a masking resist pattern having an uncovered channel area to provide a piercing point (11) therein.

4. The method according to claim 1, characterized by said metallic strip (2) comprising a steel alloy in the range of 0.20 to 1.52 mm (0.008 to 0.06 inches) thickness with the etching of said uncovered channel area being controlled to provide a uniform membrane thickness in the range of 0.02 to 0.101 mm (0.001 to 0.004 inches).

5. A circular steel alloy battery cover (17) for a hermetically sealed container, said cover (17) having a thickness in the range of 0.20 to 1.52 mm (0.008 to 0.06 inches) and having at least one chemically etched channel therein in the form of mirror image circular arcs of less than 360° spaced from the peripheral edge of said cover to provide a safety vent membrane of uniform preselected thickness in the range of 0.02 to 0.101 mm (0.001 to 0.004 inches) capable of uniformly responding to and withstanding a preselected pressure in the range of approximately 0.34 to 3.10 MPa (50 to 450 pounds per square inch) before rupture, said arcs surrounding an aperture therein sized to receive an assembly part to be fused therein.

6. The battery cover according to claim 5, characterized by said cover including opposed mirror images channels etched therein on opposite surfaces of said cover to provide said safety vent membrane of uniform thickness.

7. The battery cover according to claim 5 characterized by said etched channel including a triangular etched portion adjacent said etched channel and opposed to said full thickness portion to provide a cover piercing point (11) when the preselected pressure is exceeded.

**Patentansprüche**

1. Verfahren zum Herstellen von Sicherheitsentlüftern in metallischen Deckeln für hermetisch verschlossene Batteriebehälter durch kontinuierliches Fördern eines metallischen Bandes (2) aus Stahllegierungsmaterial, das eine Dicke von etwa 0,50 mm (0,020 Zoll) hat, von einer Rolle in einer Vorratszone (3) aus durch eine Druckzone (4); Bedrucken des Bandes (2), während es in der Druckzone (4) ist, auf wenigstens einer Oberfläche desselben mit einem chemischen Maskierresistmuster, welches gegenseitigen Abstand aufweisende, unabgedeckte Kanalbereiche in Form von entgegengesetzten spiegelbildlichen Kreisbögen (7) von weniger als 360° aufweist, wobei die gegenseitigen Abstand aufweisenden Bögen auf wenigstens einer Oberfläche des Bandes jeweils einen ein unabgedecktes Loch festlegenden Zentralbereich (8) umgeben; Fördern des maskierten, bedruckten Bandes in eine Ätzzone (12); Ausführen eines chemischen Ätzprozesses an dem Band, während es in der Ätzzone (12) ist, um die unabgedeckten, bogenartigen Kanalbereiche und die umgebenen Löcher bis in gleichmäßige, vorgewählte Tiefen zu ätzen und die Kanalbereiche mit einer gleichmäßigen Metalldicke stehenzulassen, die als Sicherheitsentlüftungsmembranen dienen, welche in der Lage sind, einen vorgewählten Druck in dem Bereich von etwa 0,34 bis etwa 3,10 MPa (etwa 50 bis etwa 450 Pfund pro Quadratzoll) auszuhalten, bevor sie reißen, und die unabgedeckten zentralen Lochfestlegungsbereiche bis wenigstens zur Hälfte der Tiefe der Kanäle; Fördern des geätzten Bandes durch eine Spülzone (13), welche eine chemische Neutralisierstufe (18), eine Resistabstreifstufe (19) und eine Waschstufe (21) enthält; und anschließend Fördern des gespülten Bandes in eine Stanzzone (16), um aus dem geätzten Band eine Vielzahl von Batteriedekkeln (17) zu stanzen, wobei jeder Deckel eine bogenartige Sicherheitsüberdruckablaßmembran aufweist, die eine zentrale Öffnung umgibt.

2. Verfahren nach Anspruch 1, dadurch gekennzeichnet, daß das Bedrucken des metallischen Bandes (2) Maskierresistmuster mit unabgedeckten Kanalbereichen in entgegengesetzter spiegelbildlicher Beziehung auf beiden Seiten des metallischen Bandes beinhaltet.

3. Verfahren nach Anspruch 1, dadurch gekennzeichnet, daß das Bedrucken des metallischen Bandes (2) ein Maskierresistmuster beinhaltet, das einen unabgedeckten Kanalbereich hat, um darin eine Durchbohrungsspitze (11) zu schaffen.

4. Verfahren nach Anspruch 1, dadurch gekennzeichnet, daß das metallische Band (2) eine Stahllegierung in dem Bereich von 0,20 bis 1,52 mm (0,008 bis 0,06 Zoll) Dicke ist, wobei das Ätzen des unabgedeckten Kanalbereiches gesteuert wird, um eine gleichmäßige Membrandicke in dem Bereich von 0,02 bis 0,101 mm (0,001 bis 0,004 Zoll) zu schaffen.

5. Kreisförmiger Stahllegierungsbatteriedeckel (17) für einen hermetisch verschlossenen Behälter, wobei der Deckel (17) eine Dicke in dem Bereich von 0,20 bis 1,52 mm (0,008 bis 0,06 Zoll) und wenigstens einen chemisch geätzten Kanal in Form von spiegelbildlichen kreisförmigen Bögen von weniger als 360° mit Abstand von dem Umfangsrand des Deckels zum Schaffen einer Sicherheitsentlüftungsmembran mit gleichmäßiger, vorgewählter Dicke in dem Bereich von 0,02 bis 0,101 mm (0,001 bis 0,004 Zoll) hat, die in der Lage ist, auf einen vorgewählten Druck in dem Bereich von etwa 0,34 bis 3,10 MPa (50 bis 450 Pfund pro Quadratzoll) anzusprechen und diesen Druck auszuhalten, bevor sie reißt, wobei die Bögen eine Öffnung darin umgeben, die so bemessen ist, daß sie ein Montageteil aufnimmt, welches darin einzuschmelzen ist.

6. Batteriedeckel nach Anspruch 5, dadurch gekennzeichnet, daß der Deckel entgegengesetzte spiegelbildliche Kanäle aufweist, die darin auf entgegengesetzten Oberflächen des Deckels eingeätzt sind, um die Sicherheitsentlüftungsmembran gleichmäßiger Dicke zu schaffen.

7. Batteriedeckel nach Anspruch 5, dadurch gekennzeichnet, daß der geätzte Kanal einen dreieckigen geätzten Teil benachbart zu dem geätzten Kanal und entgegengesetzt zu dem die volle Dicke aufweisenden Teil hat, um eine Deckeldurchbohrungsspitze (11) zu schaffen, wenn der vorgewählte Druck überschritten wird.

## Revendications

1. Procédé de fabrication d'évents de sécurité pratiqués dans des couvercles métalliques destinés à des récipients totalement étanches pour accumulateurs, ce procédé comprenant les étapes consistant à: acheminer en continu une bande métallique (2) constituée d'une matière en alliage à base d'acier et ayant une épaisseur d'approximativement 0,50 mm (0,020 pouce) à partir d'une bobine située dans une zone d'alimentation (3), à travers une zone d'impression (4); imprimer cette bande (2), lorsqu'elle se trouve dans la zone (4) destinée à cet effet, sur au moins une de ses surfaces, avec un modèle chimique de réserve destiné au masquage, ce modèle comprenant des zones découvertes de canal espacées en forme d'arcs circulaires (7) spéculaires opposés inférieurs à 360°, les arcs espacés se trouvant sur une au moins une surface de cette bande entourant chacun une zone centrale (8) découverte définissant un trou; acheminer cette bande imprimée masquée à une zone de mordançage (12); soumettre cette bande, lorsqu'elle se trouve dans la zone de mordançage (12) à un procédé chimique en vue de mordancer ces zones découvertes de canal en forme d'arcs et les trous qu'elles entourant, jusqu'à des profondeurs uniformes présélectionnées, en vue d'obtenir une épaisseur métallique uniforme de zones de canal, cette épaisseur faisant office de diaphragme de sécurité muni d'évent et apte à résister à une pression présélectionnée comprise dans l'intervalle allant d'approximativement 0,34 à approximativement 3,10 MPa (d'approximativement 50 à approximativement 450 livres par pouce carré) avant la rupture, et en vue d'obtenir une épaisseur de zones découvertes définissant un trou central correspondant à au moins la moitié de la profondeur de ces canaux; acheminer cette bande mordancée à travers une zone de rinçage (13) qui comprend une étape (18) chimique de neutralisation, une étape (19) d'élimination de l'agent de réserve, ainsi qu'une étape (21) de lavage; et acheminer enfin cette bande rincée à une zone (16) en vue de matricer la bande mordancée en une série de couvercles (17) pour accumulateurs, chaque couvercle étant muni d'un diaphragme de sécurité muni d'un évent d'échappement en forme d'arc entourant une ouverture centrale.

2. Procédé selon la revendication 1, caractérisé en ce que l'impression de la bande métallique (2) comprend des modèles de réserve destinés au masquage munis de zones découvertes de canaux en relation spéculaire opposée sur les deux faces de la bande métallique.

3. Procédé selon la revendication 1, caractérisé en ce que l'impression de la bande métallique (2) comprend un modèle de réserve destiné au masquage muni d'une zone découverte de canal en vue d'y fournir un point de perçage (11).

4. Procédé selon la revendication 1, caractérisé en ce que la bande métallique (2) est constituée d'un alliage à base d'acier d'une épaisseur comprise dans l'intervalle allant de 0,20 à 1,52 mm (0,008 à 0,06 pouce), le mordançage de cette zone découverte de canal étant réglé pour obtenir une épaisseur uniforme de diaphragme comprise dans l'intervalle allant de 0,02 à 0,101 mm (de 0,001 à 0,004 pouce).

5. Couvercle (17) circulaire pour accumulateur, constitué d'un alliage à base d'acier destiné à un récipient totalement étanche, ce couvercle (17) ayant une épaisseur comprise dans l'intervalle allant de 0,20 à 1,52 mm (de 0,008 à 0,06 pouce), et dans lequel on a pratiqué au moins un canal mordancé chimiquement sous forme d'arcs circulaires spéculaires inférieurs à 360° et séparés du bord périphérique du couvercle, en vue de fournir un diaphragme de sécurité muni d'un évent et ayant une épaisseur uniforme présélectionnée comprise dans l'intervalle allant de 0,02 à 0,101 mm (de 0,001 à 0,004 pouce) apte à répondre uniformément et à résister à une pression présélectionnée comprise dans l'intervalle allant de 0,34 à 3,10 MPa (entre 50 et 450 livres par pouce carré) avant de se rompre, ces arcs entourant une ouverture qui y a été pratiquée et dimensionnée pour recevoir une pièce d'assemblage venant s'y insérer.

6. Couvercle pour accumulateur selon la revendication 5, caractérisé en ce qu'il est muni de canaux qui y ont été mordancés en relation spéculaire opposée sur les surfaces opposées du couvercle, en vue de fournir le diaphragme de sécurité muni d'un évent et ayant une épaisseur uniforme.

7. Couvercle pour accumulateur selon la revendication 5, caractérisé en ce que le canal mordancé comprend une portion triangulaire mordancée adjacente au canal mordancé et opposé à la portion d'épaisseur complète, en vue d'obtenir un point de perçage de couvercle (11) lorsque la pression présélectionnée est dépassée.

FIG. 1

FIG. 2

FIG. 3

FIG. 4

FIG. 5

FIG. 6

FIG. 7

FIG. 8

2

FIG. 9

FIG. 10

FIG. 11

FIG. 12